# EUROPEAN PATENT SPECIFICATION

(11) **EP 4 630 481 B1**
(45) Date of publication and mention of the grant of the patent: **11.11.2026**
(21) Application number: 23821241.9
(22) Date of filing: 07.12.2023
(51) Int. Cl.: C08J 11/14, C08J 11/16, C08J 11/10

(54) **METHOD FOR RECYCLING A POLYAMIDE COMPRISING A PRETREATMENT STEP**
VERFAHREN ZUR WIEDERVERWERTUNG EINES POLYAMIDS MIT VORBEHANDLUNGSSCHRITT
PROCÉDÉ DE RECYCLAGE D'UN POLYAMIDE COMPRENANT UNE ÉTAPE DE PRÉTRAITEMENT

(30) Priority: 08.12.2022 EP 22306819
(43) Date of publication of application: 15.10.2025
(73) Proprietor: Syensqo Specialty Polymers USA, LLC, Alpharetta, GA 30005-3914 (US)
(72) Inventor: TOURAUD, Franck, 69190 Saint-Fons (FR); JEOL, Stéphane, 69190 Saint-Fons (FR)
(74) Representative: Senninger, Thierry
(86) International application number: PCT/EP2023/084715
(87) International publication number: WO 2024/121309

(56) References cited:
- WO-A1-2022/216681
- US-B1- 6 214 592

## Description

This application claims priority of European patent application No. 22306819.8 filed on 8 December 2022.

The present disclosure relates to a method for recycling a crystalline polyamide that comprises a pretreatment step that removes part or totality of the crystallinity of the polyamide before the depolymerization step of the polyamide into its constitutive monomers.

### [Context of the invention]

Plastics are inexpensive and durable materials, which can be used to manufacture a variety of products that find use in a wide range of applications, so that the production of plastics has increased dramatically over the years since their discovery. It is estimated that about 40% of these plastics are used for single-use disposable applications, such as packaging, agricultural films, disposable consumer items or for short-lived products that are discarded within a year of manufacture. Because of the durability of the polymers involved, substantial quantities of plastics are piling up in landfill sites and in natural habitats worldwide, generating increasing environmental problems. Even degradable and biodegradable plastics may persist for decades depending on local environmental factors, like levels of ultraviolet light exposure, temperature, presence of suitable microorganisms, etc.

One solution to reduce environmental and economic impacts correlated to the accumulation of plastic is closed-loop recycling wherein plastic material is mechanically reprocessed to manufacture new products. For example, one of the most common closed-loop recycling is the polyethylene terephthalate (PET) recycling. PET wastes are subjected to successive treatments leading to a food-contact-approved recycled PET, which is collected, sorted, pressed into bales, crushed, washed, chopped into flakes, melted and extruded in pellets and offered for sale. Then, these recycled PET may be used to create fabrics for the clothing industry or new packaging such as bottles or blister packs, etc.

However, plastic wastes are generally collected all together, so that plastic bales contain a mixture of different plastics, the composition of which may vary from source to source, and the proportions of which may vary from bale to bale. Consequently, recycling processes require preliminary selection to sort out the plastic products according to their composition, size, resin type, colour, functional additives used, etc.

Another potential process for recycling plastics consists of chemical recycling allowing recovering the monomers of the polymer. The resulting monomers may then be used to re-manufacture plastic materials (the same or other plastic materials) or to make other synthetic chemicals. While this chemical and enzymatic depolymerization process has been well optimized over the years for PET with very high yield of recycled ethylene glycol and recycled terephthalic acid, there is still need to develop similarly an efficient and optimized process for polyamides.

### [Background art]

WO 2022/058291 discloses an improved process for the acid hydrolysis of polylaurolactam with sulfuric acid at a temperature between 125 and 190°C, preferably at a temperature higher than 160°C. The weight ratio of H₂SO₄ / polyamide used is preferably 1:0.1 to 1:1.

US 5,668,277 discloses the depolymerization of nylon 6 or a mixture of nylons through the reaction with a nitrogen-containing compound such as ammonia or an amine. The reaction can be performed in the molten form. The method disclosed is different from the method of claim 1.

Polymer Journal, Vol. 5, No. 3, pp 248-254 (1973) discloses the dissolution and nylon 6 in a metal halide-alcohol system.

J. Appl. Polym. Sci. 2021,138(40), 1-9 "Investigation of the decomplexation of polyamide/CaCl2 complex toward a green, nondestructive recovery of polyamide from textile waste" (https://doi.org/10.1002/app.51170) discloses the nondestructive dissolution and recovery of polyamide 66 fiber from mixed textile waste by using the solvent system CaCl₂/ethanol/water.

US 6,214,592 (D1) discloses the enzymatic hydrolysis of amide groups of polyamide. D1 discloses CaCl₂ in a solution and not in contact with a polymeric component in the molten form.

WO 2022/216681 (D2) discloses a method for chemically recycling a condensation polymer, the method comprising: melt-processing a mixture comprising a condensation polymer and a catalyst, thereby forming an amorphous feed material comprising an amorphized condensation polymer and the catalyst, wherein the amorphous feed material has a crystalline polymer content of 30 wt.% or less; and depolymerizing the amorphous feed material in a reaction medium comprising a reactive solvent, thereby forming a product mixture comprising monomers corresponding to the amorphized condensation polymer. ZnAc₂ is disclosed in the examples. The method of the invention does not use a reactive solvent.

WO 2023/120427 discloses the depolymerization of polyamide wherein the polyamide is heated in a solvent containing a polyhydric alcohol and an inorganic salt. The method of the invention is different as there inorganic salt in put into contact with the polymeric component is in the molten form and not in a solvent.

None of these documents discloses or suggests the method of the invention.

### [Technical problem to be solved]

The depolymerization of crystalline polyamides of the AABB type (AABB-polyamides are prepared by the reaction of diamines and a diacids) is well documented and may be performed under different conditions.

There is a need for an efficient and easy to implement method of recovery of the monomers from a product based on a polyamide of the AABB type, notably from a product further comprising fillers.

In particular, there is a need for a method of recovery using an amorphization step that requires a lesser proportion of additives introduced into the method.

The method of the invention aims at solving this technical problem.

### [Brief disclosure of the invention]

The method of the invention is disclosed in any one of the claims 1-23.

More precisions and details about the method are now provided below.

### [General definitions]

wt.% is a percentage by weight.

When numerical ranges are indicated herein, the end-points of the ranges (even of open-ended ranges such as those comprising *"at least"* or *"at most"*) are included.

The proportions of recurring units in a polymer are expressed in mol% and given relative to the total amount of recurring units in said polymer.

In the present application, unless otherwise indicated, any specific embodiment or technical feature relating to the method of the invention is applicable to and interchangeable with another embodiment or technical feature also relating to the method of the invention and disclosed elsewhere in the application.

An aliphatic diacid is a diacid represented by formula HOOC-Alk-COOH. An aliphatic diamine is a diamine represented by formula H₂N-Alk-NH₂. Alk designates a linear or branched alkylene group.

The term *"inorganic salt"* used herein means that the the salt does not contain in its chemical structure carbon atoms except that the salt can be a carbonate.

### [Disclosure of the invention]

The invention relates to a method of recovery of the monomers from a polyamide (PA), notably of the AABB type, as disclosed in claim 1.

Details about the all the features of this method are disclosed below and herein.

### Product (P)

The product (P) comprises a polymer component which comprises at least one polyamide (PA), notably of the AABB type. A polyamide of the AABB types results from the polycondensation of at least one diamine and at least one diacid.

According to an embodiment, the polyamide (PA) comprise at least 50.0 mol% of recurring units (R_{PA}) formed from the condensation of at least diacid (A) and at least diamine (B), notably as disclosed below. The proportion of recurring units is expressed in mol% and is based on the total amount of recurring units in the polyamide (PA). According to another embodiment, the recurring units of the polyamide (PA) consist of recurring units (R_{PA}) formed from the condensation of at least diacid (A) and at least diamine (B), notably as disclosed below.

The recurring units (R_{PA}) are typically according to formula (F) below:

-NH-Rₐ-NH-C(O)-R_{b}-C(O)- (F)

wherein Rₐ and R_{b}, equal to or different from each other, are divalent hydrocarbon groups selected in the group of aliphatic, alicyclic, cycloaliphatic and aromatic groups.

The diacid (A) may be any one of the diacids selected in the group of the diacids disclosed herein and/or the diamine (B) may be any one of the diamines selected in the group of the diamines disclosed herein.

The polyamide (PA) is typically prepared by polycondensation of:
- at least one diacid (A) selected in the group of C₂-C₁₈ aliphatic diacids; diacids of formula HOOC-Cy-COOH where Cy is a C₃-C₆ non-aromatic cycle optionally substituted by C₁-C₁₀ alkyl groups; isophthalic acid and terephthalic acid; and
- at least one diamine (B) selected in the group consisting of C₂-C₁₈ aliphatic diamines, C₄-C₁₈ cycloaliphatic diamines and C₈-C₁₈ arylaliphatic diamines.

The polyamide (PA) is more particularly prepared by polycondensation of:
- at least one diacid (A) selected in the group of C₃-C₁₈ aliphatic diacids, isophthalic acid and terephthalic acid; and
- at least one diamine (B) selected in the group consisting of C₂-C₁₈ aliphatic diamines, C₄-C₁₈ cycloaliphatic diamines and C₈-C₁₈ arylaliphatic diamines.

The diacid (A) may be an aliphatic diacid represented by general formula (I) HOOC-Alk-COOH, wherein Alk is a C₁-C₁₆ linear or branched alkylene group. Alk is generally a C₁-C₁₆ linear alkylene group. For instance, the aliphatic diacid (A) may be adipic acid, azelaic acid or sebacic acid.

The diacid (A) may be a diacid of formula HOOC-Cy-COOH where Cy is a C₃-C₆ non-aromatic cycle optionally substituted by C₁-C₁₀ alkyl groups. For instance, the diacid may be 1,4-cyclohexane dicarboxylic acid or 1,3-cyclohexane dicarboxylic acid.

The diamine (B) may be an aliphatic diamine represented by the general formula (II) H₂N-Alk-NH₂, wherein Alk is a C₂-C₁₈ linear or branched alkylene group. For instance, the aliphatic diamine may be hexamethylene diamine, 2,2,4-trimethyl-1,6-hexanediamine, 2,4,4-trimethyl-1,6-hexanediamine, 2-methyl-1,5-diaminopentane, 1,5-diaminopentane or 1,9-diamino-nonane.

The diamine (B) may also be a C₄-C₁₈ cycloaliphatic diamine. A cycloaliphatic diamine is a diamine comprising at least one cycloaliphatic group between the two NH₂. The cycloaliphatic diamine may more particularly be selected in group consisting of isophorone diamine, norbornane diamine, 1,3-bis(aminomethyl)cyclohexane (1,3-BAC), 1,4-bis(aminomethyl)cyclohexane (1,4-BAC) and the diamines of formula (III): 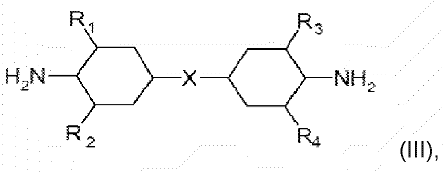 wherein R₁, R₂, R₃ and R₄ are independently selected in the group of H and C₁-C₆ alkyl groups and X is a C₁-C₁₀ alkylene groups. In formula (III), X is more particularly a methylene group. In formula (III), R₁, R₂, R₃ and R₄ are more particularly independently selected in the group consisting of H and CH₃.

The cycloaliphatic diamine may more particularly be selected in group consisting of isophorone diamine, norbornane diamine, 1,3-BAC, 1,4-BAC, para-bis(aminocyclohexyl)-methane (PACM) and bis-(3-methyl-4-aminocyclohexyl)-methane (MACM).

The diamine (B) may be a C₈-C₁₈ arylaliphatic diamine, notably of formula (IV): 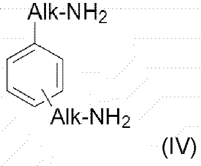 wherein Alk is a C₁-C₆ linear or branched alkylene group. The diamine of formula (IV) may be for instance m-xylylene diamine (MXDA) or p-xylylene diamine (PXDA).

Polyamide (PA) is a semi-crystalline polyamide. The heat of fusion (Hm) of the polyamide (PA) is generally at least 5.0 J/g, preferably at least 10.0 J/g.

Polyamide (PA) may more particularly be selected in the group of polyamides X.Y where X is an aliphatic diamine represented by general formula (II) or as listed herein and Y is an aliphatic diacid represented by general formula (I) or as listed herein.

The polyamide (PA) may more particularly be selected in the group consisting of polyamide 6.6, polyamide 6.9, polyamide 6.10, polyamide 6.12, polyamide 10.10, polyamide 5.10, polyamides 5.6, polyamide 5.9, polyamide 4.6, polyamide 4.9, polyamide 4.10, polyamide 12.12, polyamide 10.12, polyamide XT where X is a C₄-C₁₂-diamine; polyamide MXD6, polyamide MXD6/PXD6, polyamide MXD6/MXDI, polyamide 6T/66, polyamide 6T/6I/66, polyamide 6T/6I and mixtures thereof *(note: MXD designates a structural unit with MXDA (m-xylylenediamine)* as *the diamine; PXD designates a structural unit with PXDA (p-xylylenediamine)* as *the diamine; I designates designates a structural unit with isophthalic acid as the diacid; T designates designates a structural unit with terephthalic acid as the diacid).*

The polyamide (PA) may more particularly be a polyamide 6.6, a polyamide 6.10 or MXD6.

The polymer component may also comprise another polymer that is not a polyamide (PA) as defined above. This polymer may be either blended with the polyamide (PA) and/or physically present with polyamide (PA) in product (P) but not blended. Preferably, the other polymer is not a polyamide. For instance, the other polymer can be a polyester such as polyethylene terephthalate, polytrimethylene terephthalate, polybutylene terephthalate, polycyclohexylenedimethylene terephthalate; a polyolefin such as polyethylene or polypropylene; a polyphenylenether.

Product (P) usually also comprises at least one polymer additive (Add). The polymer additive (Add) may be selected in the group consisting of fillers, colorants, dyes, pigments, lubricants, plasticizers, flame retardants, nucleating agents, heat stabilizers, UV stabilizers, elastomers, core-shell particles, adhesives, antioxidants and processing aids. The polymer additive (Add) may more particularly be selected in the group consisting of fillers, colorants, dyes, pigments, lubricants, elastomers and heat stabilizers.

Product (P) to be treated may be in various forms. Indeed, product (P) may for instance be in the form of pellets, powders, films, flakes, molded or extruded or 3D printed parts, tubes, filaments, yarns, textiles, fabrics or under any type of geometry. More particularly, product (P) may be in the form of a film comprising at least one layer comprising or made of the polyamide (PA). Product (P) may more particularly be in the form of a multilayer film comprising at least one layer comprising or made of the polyamide (PA). For example, product (P) may be in the form of a multilayer film comprising a layer comprising or made of the polyamide (PA), notably MXD6, in between two layers comprising polyethylene terephthalate (PET).

The proportion of polyamide (PA) in product (P) is generally at least 30.0 wt.%, more particularly at least 40.0 wt.%. This proportion may be at least 50.0 wt.% or even at least 60.0 wt.%. This proportion may be 100 wt.% if product (P) consists of polyamide (PA). Yet, this situation is rare as the method of the invention is meant to apply to products of our day-to-day life for which polymer additives are usually present in combination with the polyamide (PA). The proportion of polyamide (PA) in product (P) is generally less than 99.9 wt.%, more particularly less than 99.5 wt.%.

The number average molecular weight Mn of the polyamide (PA) is generally between 500 and 50,000 g/mol, preferably between 7,000 and 35,000 g/mol, even more preferably between 10,000 g/mol and 20,000 g/mol. Mn is determined by the equation Mn=2,000,000/[EG], with [EG] being the concentration in meq (milliequivalent)/kg of the end-groups of the polyamide (PA). The usual end-groups in polyamides are -NH₂ and -COOH. Yet, those end-groups may in some processes be converted, partly or totally, into other end-groups by reaction with an end-capping agent. Examples of end-capping agent are monofunctional molecules containing an amine or a carboxylic acid such as acetic acid, benzoic acid, propionic acid.

### Optional pretreatment of product (P)

Product (P) may be pretreated prior to step a). The pretreatment step may include a mechanical or physical modification of product, such as cutting, crushing, grinding or fractionation.

Product (P) is conveniently in the form of particles with a size lower than 10.0 mm, preferably lower than 5.0 mm, even preferably lower than 3.0 mm.

### Step a)

In step a), product (P) is put into contact with an inorganic salt (A*) to reduce partly or totally the crystallinity of the polyamide (PA).

Step a) is performed with the polymeric component of product (P) in the molten form.

Step a) may be performed in any melt-mixing apparatus designed to mix polymers in the molten form. The environment footprint of the method is improved with step a) being performed in the molten form without the need to use any solvent.

Step a) may be performed in a kneader such as a Banbury mixer, in a static mixer such as the SMX static mixer commercialized by Sulzer or in an extruder. The static mixer needs to be adapted to fluids of a high viscosity such as molten polymers. The skilled person knows that there exist several types of static mixers adapted to fluids of a high viscosity, notably those disclosed in Progress in Polymer Science, 37(10), 1333-1349.

Step a) is preferably performed in an extruder, notably a single-screw extruder or a twin-screw extruder.

The inorganic salt (A*) and product (P) may be introduced into the melt-mixing apparatus in different ways. According to an embodiment, they are introduced separately. For instance, inorganic salt (A)* may be introduced into an extruder in a lateral port of the extruder. According to another embodiment, inorganic salt (A*) and product (P) are introduced in the melt-mixing appararus in the form of a premix. For instance, inorganic salt (A*) and product (P) may have been put into contact, both being in the solid form. To ensure an intimate contact between the particles of the inorganic salt (A*) and the particles of product (P), the mean size of the particles is preferably low. As another example, inorganic salt (A*) and product (P) may have been put into contact when product (P) is in the molten form.

The temperature profile is adapted to the polyamide (PA) and the other polymer(s) (if any) of the polymeric component.

In step a), the temperature of the polymeric component is strictly higher than 210°C (> 210°C). It is generally at least 220°C.

The inorganic salt (A*) is disclosed in claim 1. The anion of the inorganic salt is advantageously chloride as it is more environmentally friendly than nitrate.

The inorganic salt (A*) may be in the anhydrous or hydrated form. The inorganic salt (A*) is advantageously in the hydrated form.

The inorganic salt (A*) is selected in the group of CaCl₂, CaCl₂, xH₂O, Ca(NO₃)₂, Ca(NO₃)₂, xH₂O, LiCl, ZnCl₂, MgCl₂ wherein x is an integer between 1 and 6, and combination of two or more of said inorganic salts.

The inorganic salt (A*) may more particularly be any one of the inorganic salts (A*) tested in the examples of the experimental section.

The reduction of the crystallinity of polyamide (PA) can be monitored and quantified by the techniques known by the skilled person such as differential scanning calorimetry (DSC), X-Ray diffraction (XRD) or densitometry.

In step a), the proportion of inorganic salt (A*) is usually less than 60.0 wt%, preferably less than 50.0 wt%, this proportion in wt% being expressed as the weight of inorganic salt (A*) relative to the total weight of polyamide (PA)+inorganic salt (A*). This proportion is typically at least 5.0 wt%, preferably at least 10.0 wt%.

The proportion of inorganic salt (A*) may be between 5.0 and 50.0 wt% or between 5.0 and 30.0 wt%, this proportion in wt% being expressed as the weight of inorganic salt (A*) relative to the total weight of polyamide (PA)+inorganic salt (A*).

At the end of step a), the crystallinity of the polyamide (PA) is preferably reduced by a ratio r of at least 25.0%, preferably of at least 50.0%. r is defined as: r = (Hm of polyamide (PA) - Hm at the end of step a))/Hm of polyamide (PA) x 100, Hm, being the melting enthalpy determined by DSC.

According to an embodiment of the present disclosure, r > 0.

Ratio r may be between 25.0% and 100.0%, more particularly between 25.0% and 98.0%, even more particularly between 50.0% and 95% or between 75.0 and 90.0%.

At the end of step a), the number average molecular weight (Mn) of the polyamide (PA) is preferably reduced by a ratio r* of at least 20.0%, preferably of at least 40.0%, more preferably at least 60.0%, more preferably at least 75.0%. r is defined as: r* = (Mn of polyamide (PA) - Mn at the end of step a))/Mn of polyamide (PA) x 100. Mn can advantageously be determined by size exclusion chromatography (SEC).

Ratio r* may be between 20.0% and 100.0%, more particularly between 20.0% and 98.0%, even more particularly between 40.0% and 95% or between 75.0 and 90.0%.

### Step b)

In step b), the mixture obtained at the end of step a) is optionally treated so as to remove from the molten mixture at least one solid material. A convenient treatment is the filtration of the mixture in the molten form.

The solid material that can be removed may be one of the polymer additive(s) (Add). For instance, the solid material that can be removed in step b) can be the filler(s) or the elastomer(s).

The solid material that can be removed may also be a product of degradation of the polymer(s) or of the polymer additive(s) which was generated in step a).

### Step c)

In step c), the hydrolysis of the molecules of polyamide(s) present in the mixture obtained at the end of step a) or optional step b), is performed. The molecules of polyamide(s) that are hydrolyzed are notably the molecules of the polyamide(s) initially present in product (P) and the molecules of polyamide(s) resulting from the reaction with the inorganic salt(s) (A*).

With the reduction of the crystallinity of the polyamide (PA) obtained at the end of step a), the molecules of polyamide (PA) are more easily hydrolyzed, notably with the enzymatic hydrolysis.

The hydrolysis of the polyamide is dependent on many parameters and is performed in an aqueous medium. Step a) makes it possible to improve the dispersibility of the polyamide(s) in the aqueous medium.

### Acidic hydrolysis (option (i))

Under option (i), the hydrolysis is an acidic hydrolysis involving at least one acid (Ac) and performed in an aqueous medium at a pH lower than 6.0.

The acidic hydrolysis is performed at a pH lower than 6.0, preferably lower than 4.0. The acid (Ac) to be used for the acidic hydrolysis is preferably a strong acid with a pKa lower than 2.0. The acid (Ac) may be selected in the group consisting of HCl, H₂SO₄ or a combination of two or more of said acids. The acid (Ac) is preferably HCl.

The hydrolysis in acidic conditions of step c) of opion (i) is advantageously performed with the following initial proportions in the aqueous medium:
- proportion of polyamide (PA): at least 15.0 wt.%;
- proportion of water: between 20.0 and 70.0 wt.%;
- the remainder as acid (Ac) with the condition that the proportion of acid (Ac) is at least 2.0 wt.%, preferably at least 2.5 wt.%.

These proportions are expressed in wt.% and based on the total weight of polyamide (PA), water and acid (Ac) in the liquid medium. If product (P) comprises more than one polyamide (PA), the proportions are based on the total weight of polyamides (PA), water and acid (Ac).

The initial proportion of polyamide (PA) in the aqueous medium is advantageously at least 15.0 wt.%. This proportion may be between 15.0 wt.% and 55.0 wt.%, preferably between 15.0 wt.% and 35.0 wt.%, preferably between 15.0 wt.% and 30.0 wt.%. This proportion is calculated by taking into account the proportion of the polyamide (PA) in product (P). The higher the proportion of polyamide (PA) in the liquid medium, the better the productivity. Yet, the proportion is limited to take into account the increase over time of the viscosity of the liquid medium and the need to keep a sufficient quantity of acid (Ac) to maintain a suitable kinetics of depolymerization.

The proportion of water in the aqueous medium is typically between 20.0 wt.% and 70.0 wt.%. This proportion may be between 30.0 wt.% and 70.0 wt.% or between 35.0 wt.% and 65.0 wt.%. For clarity's sake, it is noted that the proportion of water used in the context of the invention, unless otherwise expressed, takes into account the water added and the water that may stem from the solution of the acid (Ac).

The initial proportion of the acid (Ac) corresponds to the complement to 100 wt.%. In other words, proportion of acid (Ac) in wt.% = 100% - proportion of PA in wt.% - proportion of water in wt.%. The minimal proportion of the acid (Ac) in the liquid medium is preferably at least 2.0 wt.%, preferably at least 2.5 wt.%.

The initial proportion of the acid (Ac) is generally between 2.0 wt.% and 55.0 wt.%. This proportion may be between 5.0 wt.% and 55.0 wt.%.

For clarity's sake, it is noted that the proportion of the acid (Ac) in the liquid medium used in the context of the invention, unless otherwise expressed, is given as the proportion of the pure acid. For instance, a proportion of 20.0 wt.% refers to 20.0 wt.% of pure HCl irrespective of the strength of the solution (e.g. solution of HCl at 37 wt.%). For clarity's sake also, if the acid (Ac) corresponds to a combination of two or more of the acids as defined above, the proportions of acid (Ac) given herein correspond to the total proportions of the acids.

The initial molar ratio (H/N) representing the amount of H from the acid (Ac) over the amount of N from the amide bonds of the polyamide (PA) is preferably between 1.1 and 7.0. This ratio is preferably at least 2.0. This ratio may preferably be between 2.5 and 7.0.

Step c) under option i) may be performed at a temperature which is between 20°C and 150°C. This temperature is preferably between 100°C and 150°C.

### Enzymatic hydrolysis (option (ii))

Under option (ii), the hydrolysis is an enzymatic hydrolysis. This type of hydrolysis is performed in the presence of at least one enzyme.

The enzyme is selected in the group of enzymes that are suitable to break the - NH-CO- bonds of the polyamide(s). The enzyme may be an amidase, such as an aryl-acylamidase. The enzyme can for instance be one of the enzymes disclosed in US 6,214,592 or US 6,180,388 of Rhone Poulenc Fibres et polymeres SA, notably with the sequences provided in said US patents. Other enzymes are also disclosed in Appl. Microbiol. Biotechnol. (2014) 98:8751-8761 (DOI 10.1007/s00253-014-5885-2) or in Journal of Polymer Science: Part A: Polymer Chemistry, Vol. 43, 2749-2753 (2005) (DOI: 10.1002/pola.20739). Other enzymes are the following: Arthrobacter sp. KI72's NylA, NylB and NylC; derived from Pseudomonas sp. NylA and NylB of NK8; derived from Agromyces sp. KY5R's NylB and NyIC; derived from Kocuria sp. KY2's NylA, NylB and NyIC.

Step c) under option ii) is preferably performed at a temperature which is not detrimental for the activity of the enzyme(s). This temperature is preferably below 60°C.

Step c) may advantageously be performed with a limited amount of water. Step c) is advantageously performed with a weight ratio water used in step c) / weight of product (P) lower than 5.0.

Step c) may be performed in a continuous mode or preferably in batch. The skilled person can refer to Dictionary of Chemical Engineering of Professor Carl Schaschke, ISBN 978-0-19-965145-0 for an illustration of these terms.

Step c) is preferably performed in batch in a batch reactor in which product (P) is initially charged and no further product (P) is transferred during the hydrolysis.

Step c) is preferably performed at a pressure strictly less than 15.0 bar (< 15.0 bar), preferably less than and equal to 10.0 bar (≤ 10.0 bar), preferably less than and equal to 5.0 bar (≤ 5.0 bar), preferably less than and equal to 3.0 bar (≤ 3.0 bar).

Degree of conversion R: the degree of conversion R achieved at the end of step c) is preferably at least 90.0 mol%, preferably at least 95.0 mol%. This ratio corresponds to the degree of conversion of the hydrolysis of the polyamide (PA). The degree of conversion is defined as the decrease in the quantity of a reactant divided by the initial quantity thereof (IUPAC definition).

R can be calculated easily by mass conversion by taking into account the weight of polyamide(s) (PA) initially present in product (P) and the amount of polyamide(s) (PA) left at the end of step c). If product (P) comprises more than one polyamide (PA), R is calculated by taking into account the total weight of the polyamide(s) (PA).

With the method of the present invention, it is possible to reach a R of at least 90.0 mol%, or even at least 95.0 mol%, for a duration of step c) of less than 9.0 hours, preferably less than 8.0 hours.

### Step d)

In step d), a stream (S) comprising the diacid (A) in its free form or in the form of a salt and the diamine (B) in the form of a salt, is recovered at the end of step c) and is further processed in order to separate and recover the diacid (A) and the diamine (B).

Stream (S) usually also cormprises the inorganic salt(s) (A*) that are still present in this step of the method. If step b) is performed, the inorganic salt(s) (A*) have been already partly or totally removed.

Thus, stream (S) comprises the diacid (A), the diamine (B) in the form of a salt, notably in the form of a salt with the acid (Ac).

Further processing of the stream (S) is conveniently based on crystallization and distillation steps. According to an embodiment of the present disclosure, further processing of the stream (S) is based on at least one crystallization step and/or at least one distillation step. Different methods combining the crystallization and separation steps are available to further process stream (S).

As an example, the diacid (A) and the salt of the diamine (B) which are present in the stream (S) are separated. The salt of diamine (B) having been separated can then react with an inorganic base of formula XOH, X being Li, Na, K or a combination of two or more of these cations to release the diamine (B). XOH is preferably NaOH.

It is noted that before the reaction with the inorganic base (e.g. after step c) and before step d)), the method comprises a partial or total removal of the unreacted acid (Ac) from the reaction mixture. The removal is easier when the acid (Ac) is volatile. For instance, HCl, HBr or methanesulfonic acid are acids that can be easily removed from the aqueous medium, notably by distillation. The acid (Ac) may be removed partially or totally from the reaction mixture by heating and/or applying vacuum to the reaction mixture. This makes it possible to use a decreased amount of inorganic base for the reaction (neutralization) and hence, to decrease the amount of salt of X that is liberated.

The separation of the diacid (A) and the salt of the diamine (B) may conveniently be performed by crystallisation. Crystallisation is a separation technique that makes use of differences in solubility of the components that are present in the aqueous medium. For instance, in the case of PA 66, a substantial part of the diacid (A) (adipic acid) can crystallise at ambient temperature while the salt of the diamine (B) (hexamethylene diamine) can be left in the aqueous medium. If the aqueous medium is cooled below ambient temperature, more adipic acid crystallizes which helps increase the yield of recovery of the adipic acid. After neutralisation with the inorganic base XOH, the diamine (B) is released and can be recovered, for instance by distillation. The inorganic salt(s) (A*) could then remain with the residues in the boiler of the distillation column.

The compounds recovered can be further purified to the level of purity requested by the application.

### [Experimental section]

Various mixtures were prepared using a DSM microcompounder by melt mixing at 280-285°C, 50 rpm for 3 minutes a virgin polyamide 66 resin and adjusted amount of inorganic salts (A*), until homogenization. The mixtures are then recovered, quenched and analyzed.

**Table I**

| **Ex** | **Inorganic salt (A*)** | | **Analysis of the mixture after mixing** | | | |
|---|---|---|---|---|---|---|
| | | | | **Tm & Hm (DSC)** | **SEC (g/mol)** | **r (%)** |
| **CE1** | / | 0 | opaque | Tm = 265°C | 10,100 | na |
| | | | | Hm=64 J/g | | |
| **E2** | CaCl₂ anhydrous | 30 wt% | lightly opaque | No melting peak (Hm=0) | 4,100 | 100 |
| **E3** | CaCl₂, 6H₂O | 10 wt% | Transparent | Tm= 239°C | Nd | 36 |
| | | | | Hm = 41 J/g | | |
| **E4** | | 20 wt% | Transparent | Tm = 220°C | Nd | 75 |
| | | | | Hm = 16 J/g | | |
| **E5** | | 30 wt% | Transparent | No melting | Nd | 100 |
| **E6** | | 40 wt% | lightly opaque | No melting | Nd | 100 |
| **E7** | | 50 wt% | Opaque | No melting | 2,700 | 100 |
| **E8** | ZnCl₂ | 20 wt% | Opaque | Tm=222°C | 7,950 | 69 |
| | | | | Hm=20 J/g | | |
| **E9** | MgCl₂ | 20 wt% | Transparent | No melting | 10,070 | 100 |
| | | | | Tg=121°C | | |
| **E10** | Ca(NO₃)₂, 4H₂O | 20 wt% | Opaque | Tm=233°C | / | 55 |
| | | | | Hm=30J/g | | |

The degree of plasticization is easily monitored by following the residual enthalpy of fusion Hm by DSC.

The samples having reduced crystallinity thus offer an easier access to the amide bonds that are no longer engaged in dense crystalline structures, through H bond interactions.

The SEC results also show that the amorphization may be accompanied by a molecular weight reduction, notably if the inorganic salt (A*) is in an hydrated form (*e.g.* E7). This MW reduction improves hydrodispersibility of the polymer. This combined with amorphization increases accessibility to the amide bonds, necessary for a complete hydrolysis, chemically or enzymatically.

### Comparative examples with ZnAc₂, 2H₂O

In a second shot of experiments, various mixtures were prepared using a DSM microcompounder by melt mixing at 280-285°C, 50 rpm for 3 minutes a virgin polyamide 66 resin and adjusted amount of ZnAc₂, 2H₂O (proportions from 2 wt% to 30 wt%), until homogenization. The mixtures are then recovered, quenched and analyzed.

**Table II**

| **Ex** | **ZnAc₂, 2H₂O** | **Analysis of the mixture after mixing** | |
|---|---|---|---|
| | | **Tm & Hm (DSC)** | **r (%)** |
| **CE11** | / | Tm = 262°C | / |
| | | Hm = 72 J/g | |
| **CE12** | 2 wt% | No amorphisation detected | |
| **CE13** | 4 wt% | No amorphisation detected | |
| **CE14** | 6 wt% | No amorphisation detected | |
| **CE15** | 10 wt% | No amorphisation detected | |
| **CE16** | 30 wt% | Tm = 260°C | 65% |
| | | Hm = 24 J/g | |

As can be seen with the results disclosed in Table II, ZnAc₂, 2H₂O is not as effective as the inorganic salts (A*) listed in Table I for reducing the crystallinity of the polyamide: compare CE16 (amorphization of 65% with 30 wt% of additive) and E2 (amorphization of 100% with 30 wt% of CaCl₂ anhydrous); E3-E6 (amorphization of 75% with 20 wt% of CaCl₂, 6H₂O); E8 (amorphization of 69% with 20 wt% of ZnCl₂); E9 (amorphization of 100% with 20 wt% of MgCl₂) and E10 (amorphization of 55% with 20 wt% of Ca(NO₃)₂, 4H₂O). The method of the invention is therefore more efficient than the method of D2.

## Claims

1. Method of recovery of the monomers from a polyamide (PA), notably of the AABB type, comprising the following steps:
- a) a product (P) comprising a polymeric component comprising the polyamide (PA) is put into contact with at least one inorganic salt (A*) to reduce partly or totally the crystallinity of the polyamide (PA), step a) being performed with the polymeric component of product (P) being in the molten form and the inorganic salt (A*) being selected in the group of the inorganic salts of alkaline metals, the inorganic salts of alkaline-earth metals and the inorganic salts of Zn; the inorganic salt (A*) being selected in the group of CaCl₂, CaCl₂, xH₂O, Ca(NO₃)₂, Ca(NO₃)₂, xH₂O, LiCl, ZnCl₂, MgCl₂ wherein x is an integer between 1 and 6, and combination of two or more of said inorganic salts;
- b) the mixture obtained at the end of step a) is optionally treated so as to remove from the molten mixture at least one solid material;
- c) the hydrolysis of the molecules of polyamide(s) present in the mixture obtained at the end of step a) or optional step b), is performed in an aqueous medium either (i) by an acidic involving at least one acid (Ac), this hydrolysis being performed in an aqueous medium at a pH lower than 6.0, or (ii) by an enzymatic hydrolysis;
- d) a stream (S) comprising the diacid (A) in its free form or in the form of a salt and the diamine (B) in the form of a salt, is recovered at the end of step c) and is further processed in order to separate and recover the diacid (A), and the diamine (B);
wherein the diacid (A) and the salt of the diamine (B) which are present in the stream (S) are separated and where the salt of diamine (B) having been separated reacts with an inorganic base of formula XOH, X being Li, Na, K or a combination of two or more of these cations to release the diamine (B) and wherein before the reaction with the inorganic base and before step d), the method comprises a partial or total removal of the unreacted acid (Ac) from the reaction mixture.

2. Method according to claim 1, wherein:
- the polyamide (PA) comprise at least 50.0 mol% of recurring units (R_{PA}) formed from the condensation of at least diacid (A) and at least diamine (B), this proportion being based on the total amount of recurring units in the polyamide (PA); or
- the recurring units of the polyamide (PA) consist of recurring units (R_{PA}) formed from the condensation of at least diacid (A) and at least diamine (B).

3. Method according to claim 2, wherein the recurring units (R_{PA} are according to formula (F) below:
-NH-Rₐ-NH-C(O)-R_{b}-C(O)- (F)
wherein Rₐ and R_{b}, equal to or different from each other, are divalent hydrocarbon groups selected in the group of aliphatic, alicyclic, cycloaliphatic and aromatic groups.

4. Method according to any one of the preceding claims, wherein the polyamide (PA) is prepared by polycondensation of:
- at least one diacid (A) selected in the group of C₂-C₁₈ aliphatic diacids; diacids of formula HOOC-Cy-COOH where Cy is a C₃-C₆ non-aromatic cycle optionally substituted by C₁-C₁₀ alkyl groups; isophthalic acid and terephthalic acid; and
- at least one diamine (B) selected in the group consisting of C₂-C₁₈ aliphatic diamines, C₄-C₁₈ cycloaliphatic diamines and C₈-C₁₈ arylaliphatic diamines.

5. Method according to any one of the preceding claims, wherein the polyamide (PA) is selected in the group of polyamides X.Y where X is an aliphatic diamine represented by general formula (II) H₂N-Alk-NH₂, where Alk is a C₂-C₁₈ linear or branched alkylene group and Y is an aliphatic diacid represented by general formula (I) HOOC-Alk-COOH, wherein Alk is a C₁-C₁₆ linear or branched alkylene group.

6. Method according to any one of the preceding claims, wherein the polyamide (PA) is selected in the group consisting of polyamide 6.6, polyamide 6.9, polyamide 6.10, polyamide 6.12, polyamide 10.10, polyamide 4.6, polyamide 4.9, polyamide 4.10, polyamide 12.12, polyamide 10.12, polyamide MXD6, polyamide MXD6/PXD6, polyamide MXD6/MXDI, polyamide 6T/66, polyamide 6T/6I/66, polyamide 6T/6I and mixtures thereof.

7. Method according to any one of the preceding claims, wherein the proportion of polyamide (PA) in product (P) is at least 30.0 wt.%, more particularly at least 40.0 wt.%.

8. Method according to any one of the preceding claims, wherein the proportion of inorganic salt (A*) is:
- less than 60.0 wt%, preferably less than 50.0 wt%, this proportion in wt% being expressed as the weight of inorganic salt (A*) relative to the total weight of polyamide (PA)+inorganic salt (A*); and/or
- at least 5.0 wt%, preferably at least 10.0 wt%, this proportion in wt% being expressed as the weight of inorganic salt(s) (A*) relative to the total weight of polyamide (PA)+inorganic salt (A*).

9. Method according to any one of the preceding claims, wherein at the end of step a), the crystallinity of the polyamide (PA) is reduced by a ratio r of at least 25%, preferably of at least 50%, r being defined as: r = (Hm of polyamide (PA) - Hm at the end of step a))/Hm of polyamide (PA) x 100, Hm being determined by DSC.

10. Method according to any one of the preceding claims, wherein at the end of step a), the number average molecular weight (Mn) of the polyamide (PA) is reduced by a ratio r* of at least 20.0%, preferably of at least 40.0%, more preferably at least 60.0%, more preferably at least 75.0%, r* being defined as: r = (Mn of polyamide (PA) - Mn at the end of step a))/Mn of polyamide (PA)) x 100.

11. Method according to any one of the preceding claims, wherein the degree of conversion R of polyamide (PA) achieved at the end of hydrolysis step c) is at least 90.0 mol%, preferably at least 95.0 mol%.

12. Method according to any one of the preceding claims, wherein step c) is an acidic hydrolysis performed at a pH lower than 4.0

13. Method according to any one of the preceding claims, wherein further processing of the stream (S) is based on at least one crystallization step and/or at least one distillation step.

## Patentansprüche

1. Verfahren zur Rückgewinnung der Monomere aus einem Polyamid (PA), insbesondere des AABB-Typs, umfassend die folgenden Schritte:
- a) ein Produkt (P), das eine polymere Komponente umfasst, die das Polyamid (PA) umfasst, wird mit mindestens einem anorganischen Salz (A*) in Kontakt gebracht, um die Kristallinität des Polyamids (PA) teilweise oder vollständig zu reduzieren, wobei Schritt a) mit der polymeren Komponente des Produkts (P) in der geschmolzenen Form durchgeführt wird und das anorganische Salz (A*) ausgewählt ist aus der Gruppe der anorganischen Salze von Alkalimetallen, der anorganischen Salze von Erdalkalimetallen und der anorganischen Salze von Zn; wobei das anorganische Salz (A*) ausgewählt ist aus der Gruppe von CaCl₂, CaCl₂, xH₂O, Ca(NO₃)₂, Ca(NO₃)₂, xH₂O, LiCl, ZnCl₂, MgCl₂, wobei x eine ganze Zahl zwischen 1 und 6 ist, und Kombination von zwei oder mehr der genannten anorganischen Salze;
- b) die am Ende von Schritt a) erhaltene Mischung wird optional behandelt, um aus der geschmolzenen Mischung mindestens ein festes Material zu entfernen;
- c) die Hydrolyse der Moleküle von Polyamid(en), die in der am Ende von Schritt a) oder optionalem Schritt b) erhaltenen Mischung vorhanden sind, wird in einem wässrigen Medium entweder (i) durch eine saure Hydrolyse, die mindestens eine Säure (Ac) einbezieht, wobei diese Hydrolyse in einem wässrigen Medium bei einem pH-Wert niedriger als 6,0 durchgeführt wird, oder (ii) durch eine enzymatische Hydrolyse durchgeführt;
- d) ein Strom (S), der die Disäure (A) in ihrer freien Form oder in Form eines Salzes und das Diamin (B) in Form eines Salzes umfasst, wird am Ende von Schritt c) zurückgewonnen und weiterverarbeitet, um die Disäure (A) und das Diamin (B) zu trennen und zurückzugewinnen; wobei die Disäure (A) und das Salz des Diamins (B), die in dem Strom (S) vorhanden sind, getrennt werden und wobei das Salz des Diamins (B), nachdem es getrennt wurde, mit einer anorganischen Base der Formel XOH reagiert, wobei X Li, Na, K oder eine Kombination von zwei oder mehr dieser Kationen ist, um das Diamin (B) freizusetzen, und wobei vor der Reaktion mit der anorganischen Base und vor Schritt d) das Verfahren eine teilweise oder vollständige Entfernung der nicht umgesetzten Säure (Ac) aus der Reaktionsmischung umfasst.

2. Verfahren nach Anspruch 1, wobei:
- das Polyamid (PA) mindestens 50,0 Mol-% wiederkehrender Einheiten (R_{PA}) umfasst, die aus der Kondensation mindestens einer Disäure (A) und mindestens eines Diamins (B) gebildet sind, wobei dieser Anteil auf der Gesamtmenge wiederkehrender Einheiten in dem Polyamid (PA) basiert; oder
- die wiederkehrenden Einheiten des Polyamids (PA) aus wiederkehrenden Einheiten (R_{PA}) bestehen, die aus der Kondensation mindestens einer Disäure (A) und mindestens eines Diamins (B) gebildet sind.

3. Verfahren nach Anspruch 2, wobei die wiederkehrenden Einheiten (R_{PA}) gemäß Formel (F) unten sind:
-NH-Rₐ-NH-C(O)-R_{b}-C(O)- (F)
wobei Rₐ und R_{b}, gleich oder verschieden voneinander, zweiwertige Kohlenwasserstoffgruppen sind, ausgewählt aus der Gruppe aliphatischer, alicyclischer, cycloaliphatischer und aromatischer Gruppen.

4. Verfahren nach einem der vorhergehenden Ansprüche, wobei das Polyamid (PA) durch Polykondensation hergestellt wird von:
- mindestens einer Disäure (A), ausgewählt aus der Gruppe von aliphatischen C₂-C₁₈-Disäuren; Disäuren der Formel HOOC-Cy-COOH, wobei Cy ein nichtaromatischer C₃-C₆-Zyklus ist, optional substituiert durch C₁-C₁₀-Alkylgruppen; Isophthalsäure und Terephthalsäure; und
- mindestens einem Diamin (B), ausgewählt aus der Gruppe bestehend aus aliphatischen C₂-C₁₈-Diaminen, cycloaliphatischen C₄-C₁₈-Diaminen und arylaliphatischen C₈-C₁₈-Diaminen.

5. Verfahren nach einem der vorhergehenden Ansprüche, wobei das Polyamid (PA) ausgewählt ist aus der Gruppe von Polyamiden X.Y, wobei X ein aliphatisches Diamin ist, dargestellt durch die allgemeine Formel (II) H₂N-Alk-NH₂, wobei Alk eine lineare oder verzweigte C₂-C₁₈-Alkylengruppe ist, und Y eine aliphatische Disäure ist, dargestellt durch die allgemeine Formel (I) HOOC-Alk-COOH, wobei Alk eine lineare oder verzweigte C₁-C₁₆-Alkylengruppe ist.

6. Verfahren nach einem der vorhergehenden Ansprüche, wobei das Polyamid (PA) ausgewählt ist aus der Gruppe bestehend aus Polyamid 6.6, Polyamid 6.9, Polyamid 6.10, Polyamid 6.12, Polyamid 10.10, Polyamid 4.6, Polyamid 4.9, Polyamid 4.10, Polyamid 12.12, Polyamid 10.12, Polyamid MXD6, Polyamid MXD6/PXD6, Polyamid MXD6/MXDI, Polyamid 6T/66, Polyamid 6T/6I/66, Polyamid 6T/6I und Mischungen davon.

7. Verfahren nach einem der vorhergehenden Ansprüche, wobei der Anteil von Polyamid (PA) in Produkt (P) mindestens 30,0 Gew.-% beträgt, insbesondere mindestens 40,0 Gew.-%.

8. Verfahren nach einem der vorhergehenden Ansprüche, wobei der Anteil von anorganischem Salz (A*) ist:
- weniger als 60,0 Gew.-%, vorzugsweise weniger als 50,0 Gew.-%, wobei dieser Anteil in Gew.-% als das Gewicht von anorganischem Salz (A*) relativ zum Gesamtgewicht von Polyamid (PA)+anorganischem Salz (A*) ausgedrückt ist; und/oder
- mindestens 5,0 Gew.-%, vorzugsweise mindestens 10,0 Gew.-%, wobei dieser Anteil in Gew.-% als das Gewicht von anorganischem/n Salz(en) (A*) relativ zum Gesamtgewicht von Polyamid (PA)+anorganischem Salz (A*) ausgedrückt ist.

9. Verfahren nach einem der vorhergehenden Ansprüche, wobei am Ende von Schritt a) die Kristallinität des Polyamids (PA) um ein Verhältnis r von mindestens 25 %, vorzugsweise von mindestens 50 %, reduziert ist, wobei r definiert ist als: r = (Hm von Polyamid (PA) - Hm am Ende von Schritt a))/Hm von Polyamid (PA) x 100, wobei Hm durch DSC bestimmt wird.

10. Verfahren nach einem der vorhergehenden Ansprüche, wobei am Ende von Schritt a) das Zahlenmittel des Molekulargewichts (Mn) des Polyamids (PA) um ein Verhältnis r* von mindestens 20,0 %, vorzugsweise von mindestens 40,0 %, weiter vorzugsweise mindestens 60,0 %, weiter vorzugsweise mindestens 75,0 %, reduziert ist, wobei r* definiert ist als: r = (Mn von Polyamid (PA) - Mn am Ende von Schritt a))/Mn von Polyamid (PA)) x 100.

11. Verfahren nach einem der vorhergehenden Ansprüche, wobei der Umsetzungsgrad R von Polyamid (PA), der am Ende des Hydrolyseschritts c) erreicht wird, mindestens 90,0 Mol-% beträgt, vorzugsweise mindestens 95,0 Mol-%.

12. Verfahren nach einem der vorhergehenden Ansprüche, wobei Schritt c) eine saure Hydrolyse ist, die bei einem pH-Wert niedriger als 4,0 durchgeführt wird.

13. Verfahren nach einem der vorhergehenden Ansprüche, wobei die Weiterverarbeitung des Stroms (S) auf mindestens einem Kristallisationsschritt und/oder mindestens einem Destillationsschritt basiert.

## Revendications

1. Procédé de récupération des monomères à partir d'un polyamide (PA), notamment du type AABB, comprenant les étapes suivantes:
- a) un produit (P) comprenant un constituant polymérique comprenant le polyamide (PA) est mis en contact avec au moins un sel inorganique (A^{*}) pour réduire partiellement ou totalement la cristallinité du polyamide (PA), l'étape a) étant effectuée avec le constituant polymérique du produit (P) qui est sous forme fondue et le sel inorganique (A^{*}) étant choisi dans le groupe des sels inorganiques de métaux alcalins, des sels inorganiques de métaux alcalino-terreux et des sels inorganiques de Zn; le sel inorganique (A^{*}) étant choisi dans le groupe de CaCl₂, CaCl₂, xH₂O, Ca(NO₃)₂, Ca(NO₃)₂, xH₂O, LiCl, ZnCl₂, MgCl₂ dans lequel x est un entier compris entre 1 et 6, et une combinaison de deux ou plus desdits sels inorganiques;
- b) le mélange obtenu à la fin de l'étape a) est éventuellement traité de manière à éliminer du mélange fondu au moins un matériau solide;
- c) l'hydrolyse des molécules de polyamide(s) présentes dans le mélange obtenu à la fin de l'étape a) ou de l'étape b) éventuelle, est effectuée dans un milieu aqueux soit (i) par un acide impliquant au moins un acide (Ac), cette hydrolyse étant effectuée dans un milieu aqueux à un pH inférieur à 6,0, soit (ii) par une hydrolyse enzymatique;
- d) un flux (S) comprenant le diacide (A) sous sa forme libre ou sous la forme d'un sel et la diamine (B) sous la forme d'un sel, est récupéré à la fin de l'étape c) et est en outre traité afin de séparer et récupérer le diacide (A), et la diamine (B);
dans lequel le diacide (A) et le sel de la diamine (B) qui sont présents dans le flux (S) sont séparés et dans lequel le sel de diamine (B) ayant été séparé réagit avec une base inorganique de formule XOH, X étant Li, Na, K ou une combinaison de deux ou plus de ces cations pour libérer la diamine (B) et dans lequel avant la réaction avec la base inorganique et avant l'étape d), le procédé comprend une élimination partielle ou totale de l'acide non réagi (Ac) du mélange réactionnel.

2. Procédé selon la revendication 1, dans lequel:
- le polyamide (PA) comprend au moins 50,0 % en moles de motifs récurrents (R_{PA}) formés à partir de la condensation d'au moins un diacide (A) et d'au moins une diamine (B), cette proportion étant basée sur la quantité totale de motifs récurrents dans le polyamide (PA); ou
- les motifs récurrents du polyamide (PA) consistent en des motifs récurrents (R_{PA}) formés à partir de la condensation d'au moins un diacide (A) et d'au moins une diamine (B).

3. Procédé selon la revendication 2, dans lequel les motifs récurrents (R_{PA}) sont selon la formule (F) ci-dessous:
-NH-Rₐ-NH-C(O)-R_{b}-C(O)- (F)
dans laquelle Rₐ et R_{b}, identiques ou différents l'un de l'autre, sont des groupes hydrocarbonés divalents choisis dans le groupe des groupes aliphatiques, alicycliques, cycloaliphatiques et aromatiques.

4. Procédé selon l'une quelconque des revendications précédentes, dans lequel le polyamide (PA) est préparé par polycondensation de:
- au moins un diacide (A) choisi dans le groupe des diacides aliphatiques en C₂-C₁₈; diacides de formule HOOC-Cy-COOH où Cy est un cycle non aromatique en C₃-C₆ éventuellement substitué par des groupes alkyle en C₁-C₁₀; acide isophtalique et acide téréphtalique; et
- au moins une diamine (B) choisie dans le groupe constitué par les diamines aliphatiques en C₂-C₁₈, les diamines cycloaliphatiques en C₄-C₁₈ et les diamines arylaliphatiques en C₈-C₁₈.

5. Procédé selon l'une quelconque des revendications précédentes, dans lequel le polyamide (PA) est choisi dans le groupe des polyamides X.Y où X est une diamine aliphatique représentée par la formule générale (II) H₂N-Alk-NH₂, où Alk est un groupe alkylène linéaire ou ramifié en C₂-C₁₈ et Y est un diacide aliphatique représenté par la formule générale (I) HOOC-Alk-COOH, dans lequel Alk est un groupe alkylène linéaire ou ramifié en C₁-C₁₆.

6. Procédé selon l'une quelconque des revendications précédentes, dans lequel le polyamide (PA) est choisi dans le groupe constitué par le polyamide 6.6, le polyamide 6.9, le polyamide 6.10, le polyamide 6.12, le polyamide 10.10, le polyamide 4.6, le polyamide 4.9, le polyamide 4.10, le polyamide 12.12, le polyamide 10.12, le polyamide MXD6, le polyamide MXD6/PXD6, le polyamide MXD6/MXDI, le polyamide 6T/66, le polyamide 6T/6I/66, le polyamide 6T/6I et leurs mélanges.

7. Procédé selon l'une quelconque des revendications précédentes, dans lequel la proportion de polyamide (PA) dans le produit (P) est d'au moins 30,0 % en poids, plus particulièrement d'au moins 40,0 % en poids.

8. Procédé selon l'une quelconque des revendications précédentes, dans lequel la proportion de sel inorganique (A^{*}) est:
- inférieure à 60,0 % en poids, de préférence inférieure à 50,0 % en poids, cette proportion en % en poids étant exprimée comme le poids de sel inorganique (A^{*}) par rapport au poids total de polyamide (PA)+sel inorganique (A^{*}); et/ou
- d'au moins 5,0 % en poids, de préférence d'au moins 10,0 % en poids, cette proportion en % en poids étant exprimée comme le poids de sel(s) inorganique(s) (A^{*}) par rapport au poids total de polyamide (PA)+sel inorganique (A^{*}).

9. Procédé selon l'une quelconque des revendications précédentes, dans lequel à la fin de l'étape a), la cristallinité du polyamide (PA) est réduite selon un rapport r d'au moins 25 %, de préférence d'au moins 50 %, r étant défini comme: r = (Hm du polyamide (PA) - Hm à la fin de l'étape a))/Hm du polyamide (PA) x 100, Hm étant déterminé par DSC.

10. Procédé selon l'une quelconque des revendications précédentes, dans lequel à la fin de l'étape a), la masse moléculaire moyenne en nombre (Mn) du polyamide (PA) est réduite selon un rapport r* d'au moins 20,0 %, de préférence d'au moins 40,0 %, plus préférablement d'au moins 60,0 %, plus préférablement d'au moins 75,0 %, r* étant défini comme: r* = (Mn du polyamide (PA) - Mn à la fin de l'étape a))/Mn du polyamide (PA)) x 100.

11. Procédé selon l'une quelconque des revendications précédentes, dans lequel le degré de conversion R du polyamide (PA) atteint à la fin de l'étape d'hydrolyse c) est d'au moins 90,0 % en moles, de préférence d'au moins 95,0 % en moles.

12. Procédé selon l'une quelconque des revendications précédentes, dans lequel l'étape c) est une hydrolyse acide effectuée à un pH inférieur à 4,0.

13. Procédé selon l'une quelconque des revendications précédentes, dans lequel le traitement ultérieur du flux (S) est basé sur au moins une étape de cristallisation et/ou au moins une étape de distillation.
